# EUROPÄISCHE PATENTANMELDUNG

(11) **EP 2 296 240 A1**
(43) Veröffentlichungstag der Anmeldung: **16.03.2011**
(21) Anmeldenummer: 09170336.3
(22) Anmeldetag: 15.09.2009
(51) Int. Cl.: H02G 1/08

(54) **Einziehfederspitze mit Fussstück**

(71) Anmelder: Immothal Investment GmbH, 5303 Thalgau (AT)
(72) Erfinder: Haslacher, Andreas, 5310, Mondsee (AT)
(74) Vertreter: Babeluk, Michael

(57) **Zusammenfassung**

Die Erfindung betrifft eine Einziehfederspitze (1) mit Fußstück (2), einem flexiblen Teil (3) und einem Kopfstück (4) für Einziehfedern zum Einziehen von Leitungen in Rohre und Hohlräume dergleichen, wobei die Flexibilität des flexible Teils (3) vom Fußstück (2) in Richtung des Kopfstückes (4) zunimmt.

## Beschreibung

Die Erfindung betrifft eine Einziehfederspitze mit Fußstück, einem flexiblen Teil, der zumindest teilweise aus Kunststoff besteht, und einem Kopfstück, für Einziehfedern zum Einziehen von Leitungen in Rohre und Hohlräume dergleichen.

Einziehfedern für diese Verwendungszwecke bestehen normalerweise aus einem Teil mit einer an der Spitze angebrachten Haltevorrichtung für die einzuziehenden Leitungen. Diese sind aber bei komplizierteren Rohrsystemen mit sich verändernden Rohrparametern, wie zum Beispiel Durchmesser- oder Richtungsänderungen, schlecht geeignet, da sie einerseits eine gewisse Stabilität, damit sie Problemlos auch durch längere Rohrsysteme geschoben werden können, und andererseits auch eine gewisse Flexibilität aufweisen müssen, damit sie auch bei engeren Kurven nicht stecken bleiben, und dies durch eine einteilige Ausführung nicht erreicht werden kann. Die in der WO 2006/027400 A1, der US 3,110,478 A1 und der EP 1 058 361 A1 offenbarten Einziehfedern zeichnen sich alle dadurch aus, dass das gerade beschriebene Gerüst durch eine Einziehfederspitze ergänzt wird, wobei diese durch erhöhte Flexibilität eine Verbesserung darstellen soll. Dennoch ist ein problemloses Einziehen in kompliziertere Rohrsysteme nicht gewährleistet.

Die Aufgabe der Erfindung ist nun, eine Einziehfederspitze sowie einen entsprechenden Einziehfederkörper darzustellen, deren Biegefestigkeit so optimiert ist, dass das Einführen einer Einziehfeder, die sich aus diesen beiden Komponenten zusammensetzt, selbst in komplexere Rohrleitungssysteme oder dergleichen gut möglich ist.

Diese Aufgabe wird erfindungsgemäß dadurch gelöst, dass der flexible Teil einen Zuganker aufweist, der das Fußstück mit dem Kopfstück verbindet und dass der Zuganker mit einer Hülle aus Kunststoff umspritzt ist.

Durch diesen Aufbau kann eine maximale Zugfestigkeit ohne Einbußung der Flexibilität gewährleistet werden. Der Zuganker, der die Belastbarkeit auf Zugkräfte maßgeblich vorgibt, muss so gewählt werden, dass die entsprechenden maximal auftretenden Kräfte keine Beschädigung der Einziehfederspitze nach sich ziehen. Durch die Wahl der Manteldicke und des Mantelmaterials kann die Biegesteifigkeit stark beeinflusst und damit nach den Anforderungen eingestellt werden. Durch entsprechende Versuche wurde ermittelt, dass Stahl-, Polyester- und Glasfaserseile sowie Kohlenstofffasern als Zuganker am Besten eigenen um das beste Verhältnis zwischen Zugfestigkeit und Biegesteifigkeit zu erreichen, weshalb entsprechende Einzugsfederspitzen von besonderer Bedeutung sind.

Das Verhältnis vom Außendurchmesser des Mantels zum Durchmesser des Zugankers ist von Wichtigkeit, um die entsprechenden Biege- und Festigkeitseigenschaften einzustellen. Normalerweise wird ein recht dünner Zuganker im Vergleich zum Mantel gewählt.

Damit sich die Einzelteile der Einziehfederspitze bei starker Zugspannung nicht voneinander lösen wird die Befestigung des flexiblen Teils am Kopf- bzw. Fußteil so gewählt, dass sie einerseits leicht zu fertigen und billig ist, andererseits auch den entsprechenden Belastungen stand halten kann. Dazu ist eine Klemmung des Zugankers in einer dafür vorgesehenen Bohrung oder Aushöhlung im Fuß- bzw. Kopfteil eine mögliche Ausführungsvariante, die bereits ihre Vorteile unter Beweis gestellt hat.

Steht der Zuganker in der Fertigung während des Aufspritzens des Mantelmaterials unter Zugspannung, so kann einerseits während der Fertigung die Gleichmäßigkeit und Qualität der Zugankerumspritzung mit dem Mantel garantiert werden. Andererseits wird dadurch eine dauerhafte Vorspannung des Zugankers gegenüber des Mantels erwirkt, wodurch die Biege- und Festigkeitskombination noch weiter verbessert wird.

Eine Einziehfederspitze, deren Flexibilität des flexiblen Teils vom Fußstück in Richtung des Kopfstückes zunimmt, stellt insofern eine sehr gute Lösung dar, da an der Einziehfederspitze dort, wo die Flexibilität am Meisten zum Tragen kommt, nahe am Kopfstück, die Biegesteifigkeit am geringsten ist, und eben diese dort, wo die Steifigkeit bzw. Festigkeit zwecks der Durchschiebbarkeit durch ein Rohrsystem am notwendigsten ist, im hinteren Bereich und damit nahe des Fußstückes, zunimmt. So kann das Kopfstück der Einziehfeder sehr sensitiv gegenüber Rohrparameteränderungen sein und trotzdem ein Einziehfederkörper mit durchaus größerer Biegefestigkeit benutzt werden.

Oft stellt ein linearer Anstieg der Elastizität des elastischen Teils in Richtung des Kopfstückes eine bevorzugte Variante dar, welche durch die Vielfältigkeit der Anwendungen einen besonders hohen Verwendungswert hat.

Die Erhöhung der Elastizität in Richtung des Kopfstückes kann dadurch bewirkt werden, dass sich der elastische Teil der Einziehfederspitze vom Fußstück in Richtung des Kopfstückes verjüngt. Damit können mit minimalen Aufwand beliebig gestaltete Profile hergestellt werden, die, abhängig von der Stärke, Länge und Form der Verjüngung, verschiedene Biegeverhalten aufweisen.

Durch entsprechende Variation der Dicken des flexiblen Teils im Bezug auf dessen Bereich können so Einziehfedern mit verschiedensten Elastizitätsverhalten erzeugt und damit für verschiedene Anwendungen die jeweils idealen Einziehfedern geschaffen werden.

Damit eine Leitung nach erfolgreicher Durchdringung eines Rohrsystems durchgezogen werden kann, kann eine Haltevorrichtung am Kopfstück der Einziehfeder angebracht sein, an welcher die Leitung angebracht werden kann, um die Einziehfeder wieder zurückzuziehen und damit das Kabel in die gewünschte Position im Rohrsystem zu bringen.

Um die Einziehfederspitze auf einen Einziehfederkörper anbringen zu können, kann am Fußstück eine Haltevorrichtung, zum Beispiel in Form einer Klemmvorrichtung oder eines Gewindes angebracht sein. Insbesondere ist es günstig, wenn die Einziehfederspitze abnehmbar am Einziehfederkörper befestigt ist.

Die Einziehfederspitze kann an einem Einziehfederkörper beliebiger Art angebracht werden, wobei es natürlich von Vorteil wäre, wenn ein Einziehfederkörper mit ausgewählter Biegefestigkeit benutzt werden würde, um die Effektivität der Einziehfederspitze zu maximieren.

Der oben genannte Einziehfederkörper kann nun aus Stahl oder aus Kunststoff gefertigt sein, beide Varianten tragen mit ihren Materialien entsprechende Vorteile mit ein.

Der oben genannte Einziehfederkörper kann außerdem gewendelt sein, was besondere Vorteile bei der Verwendung von Geräten, die das Einziehen der Einziehvorrichtung erleichtern, bringt.

Das Faktum, dass die minimale, auf dem flexiblen Teil der Einziehfederspitze auftretende Flexibilität größer ist als die maximale, auf dem Einziehfederkörper auftretende Flexibilität, kann überraschenderweise durchaus von Wichtigkeit sein, da so zum Beispiel ein Schiebekraftverlust vermieden werden kann, der dadurch entsteht, dass sich der Einziehfederkörper anstatt der Einziehfederspitze zuerst in einer Situation mit sich verändernder Rohrbeschaffenheit, beispielsweise einer Kurve, beugt.

Die Erfindung wird nachfolgend anhand von in Zeichnungen dargestellten Ausführungsbeispielen, auf die sie jedoch nicht beschränkt sein soll, näher veranschaulicht. Im Einzelnen zeigt Fig. 1 eine Seitenansicht einer Variante der Einziehfederspitze 1. Fig. 2 zeigt einen axialen Schnitt durch die selbe Variante der Einziehfederspitze 1 sowie den Teil der Einziehfederkörpers 12, der an der Einziehfederspitze 1 anliegt. Fig. 3 zeigt eine weitere Ausführungsvariante der Einziehfederspitze mit einem flexiblen Teil 3, der aus einem Mantel 16 und einem Zuganker 13 besteht.

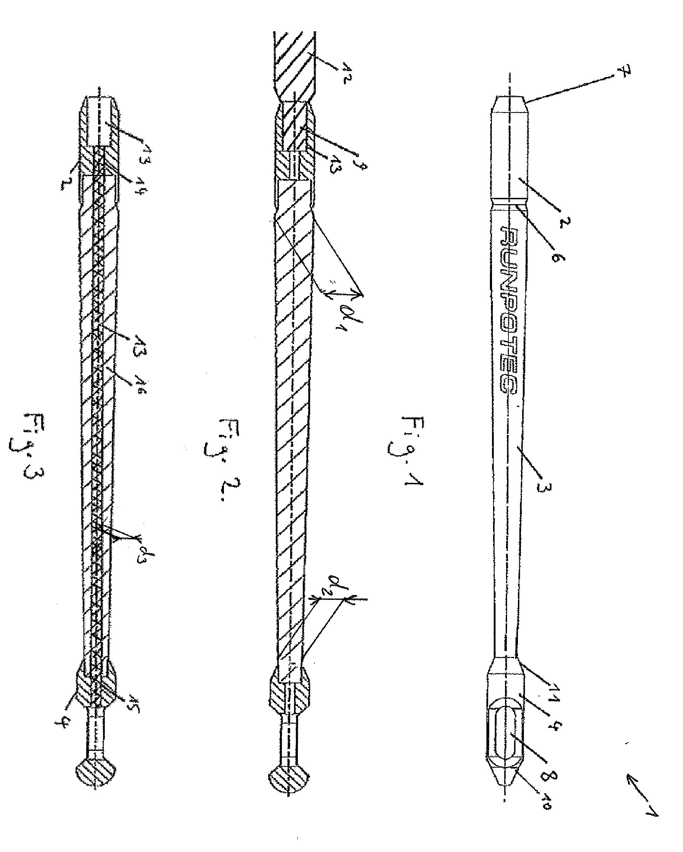

Die in Fig. 1 dargestellte Variante ist eine Einziehfederspitze 1, die sich aus einem sich verjüngendem flexiblen Teil 3, einem Fußstück 2 und einem Kopfstück 4 zusammensetzt, wobei der flexible Teil 3 von dem Fußstück 2 und dem Kopfstück 4 begrenzt wird. Das Fußstück 2 hat an der dem flexiblen Teil 3 zugewandten Seite eine Einkerbung 6, um den flexiblen Teil 3 klemmend zu halten und an der dem flexiblen Teil 3 abgewandten Seite eine Abschrägung 7. Das Kopfstück 4 weist eine in dieser Ausführungsvariante durch eine Öse ausgeformte Haltevorrichtung 8 für Leitungen und an beiden Enden Abschrägungen 10 und 11 auf.

Der in Fig. 2 dargestellte axiale Schnitt offenbart eine Aufnahme in Form einer zylindrischen Aushöhlung 13 im Fußstück 2, die, wenn die Einziehfederspitze 1 an einem Einziehfederkörper 12 angebracht ist, von einem Endstück 9 des Einziehfederkörpers 12 ausgefüllt wird, um eine auf Zug belastbare Verbindung zu ergeben. Außerdem zeigt sie, dass das Fußstück 2 und das Kopfstück 4 den flexiblen Teil 3 überragen und umschließen und so einen gefestigten Kontakt herzustellen.

Der Durchmesser d₁ des flexiblen Teils 3 im Bereich des Fußteils 2 verhält sich zum Durchmesser d₂ des flexiblen Teils 3 im Bereich des Kopfteils 4 wie 1:0,8. Dadurch kann eine optimale Variation der Steifigkeit erreicht werden.

Bei der Ausführungsvariante von Fig. 3 ist ein Zuganker 13 im Fußstück 2 in einer zylindrischen Einhöhlung 14 und im Kopfstück 4 in einer zylindrischen Einhöhlung 15 eingebettet, sowie zwischen dem Fuß- und Kopfstück 2 und 4 von einem Mantel 16 umhüllt.

Das Verhältnis vom Außendurchmesser d₁, d₂ des Mantels 16 zum Durchmesser d₃ des Zugankers 13 bewegt sich zwischen 1:0,1 und 1:0,5. Dadurch kann eine optimale Kombination von Zugfestigkeit und Biegesteifigkeit erreicht werden.

## Patentansprüche

1. Einziehfederspitze (1) mit einem Fußstück (2), einem flexiblen Teil (3), der zumindest teilweise aus Kunststoff besteht, und einem Kopfstück (4), für Einziehfedern (12) zum Einziehen von Leitungen in Rohre und Hohlräume dergleichen, **dadurch gekennzeichnet, dass** der flexible Teil (3) einen Zuganker (13) aufweist, der das Fußstück (2) mit dem Kopfstück (4) verbindet und dass der Zuganker (13) mit einer Hülle (16) aus Kunststoff umspritzt ist.

2. Einziehfederspitze (1) nach Anspruch 1 **dadurch gekennzeichnet, dass** der Zuganker (13) des flexiblen Teils (3) aus einem Stahlseil oder aus Kohlenstofffasern besteht.

3. Einziehfederspitze (1) nach Anspruch 1 oder 2, **dadurch gekennzeichnet, dass** sich das Verhältnis vom Außendurchmesser des Mantels (16) zum Durchmesser des Zugankers (13) zwischen 1:0,1 und 1:0,5 bewegt.

4. Einziehfederspitze (1) nach einem der Ansprüche 1 bis 3, **dadurch gekennzeichnet, dass** der Zuganker (13) am Kopfstück (4) in einer vorzugsweise zylindrischen Einhöhlung (15) eingebettet oder festgeklemmt ist.

5. Einziehfederspitze (1) nach einem der Ansprüche 1 bis 4, **dadurch gekennzeichnet, dass** der Zuganker (13) am Fußstück (2) in einer vorzugsweise zylindrischen Einhöhlung (14) eingebettet oder festgeklemmt ist.

6. Einziehfederspitze (1) nach einem der Ansprüche 1 bis 5, **dadurch gekennzeichnet, dass** der Zuganker (13) in Bezug auf den Mantel (16) vorgespannt ist.

7. Einziehfederspitze (1) nach einem der Ansprüche 1 bis 6, **dadurch gekennzeichnet, dass** die Flexibilität des flexible Teils (3) vom Fußstück (2) in Richtung des Kopfstückes (4) zunimmt.

8. Einziehfederspitze (1) nach einem der Ansprüche 1 bis 7 **dadurch gekennzeichnet, dass** die Flexibilität des flexiblen Teils (3) vom Fußstück (2) in Richtung des Kopfstückes (4) linear zunimmt.

9. Einziehfederspitze (1) nach einem der Ansprüche 1 bis 8, **dadurch gekennzeichnet, dass** sich zumindest ein oder mehrere Abschnitte des flexiblen Teils (3) vom Fußstück (2) in Richtung des Kopfstückes (4) verjüngt.

10. Einziehfederspitze (1) nach einem der Ansprüche 1 bis 9, **dadurch gekennzeichnet, dass** am Kopfstück (4) eine Haltevorrichtung (8) für die durchzuziehende Leitung angebracht ist.

11. Einziehfederspitze (1) nach einem der Ansprüche 1 bis 10, **dadurch gekennzeichnet, dass** am Fußstück (2) eine Aufnahme (13) für einen Einziehfederkörper (12) angebracht ist.

12. Einziehfederspitze (1) nach einem der Ansprüche 1 bis 11, **dadurch gekennzeichnet, dass** sich das Verhältnis vom Durchmesser (d₁) des flexiblen Teils (3) am Fußteil (2) zum Durchmesser (d₂) des flexiblen Teils (3) am Kopfteil (4) in einem Bereich von 1:0,9 und 1:0,55 bewegt.

13. Einziehfeder zum Einziehen von Leitungen in Rohre und Hohlräume oder dergleichen, **dadurch gekennzeichnet, dass** diese aus einem Einziehfederkörper (12) und einer Einziehfederspitze (1), welche einem der Ansprüche 1 bis 12 entspricht, besteht und dass der Einziehfederkörper (12) vorzugsweise aus Stahl oder aus Kunststoff gefertigt ist.

14. Einziehfeder nach Anspruch 13, **dadurch gekennzeichnet, dass** die Einziehfederspitze (1) abnehmbar, vorzugsweise durch Verschraubung, am Einziehfederkörper (12) befestigt ist.

15. Einziehfeder nach einem der Ansprüche 13 oder 14, **dadurch gekennzeichnet, dass** die minimale, auf dem flexiblen Teil der Einziehfederspitze (1) auftretende, Flexibilität größer ist als die maximale, auf dem Einziehfederkörper (12) auftretende Flexibilität.
